# EUROPEAN PATENT APPLICATION

(11) **EP 4 471 927 A1**
(43) Date of publication of application: **04.12.2024**
(21) Application number: 23746886.3
(22) Date of filing: 23.01.2023
(51) Int. Cl.: H01M 10/0587, H01M 4/13, H01M 4/48, H01M 10/05, H01M 50/531

(54) **CYLINDRICAL NONAQUEOUS ELECTROLYTE SECONDARY BATTERY**

(30) Priority: 28.01.2022 JP 2022011957
(71) Applicant: Panasonic Energy Co., Ltd., Osaka 570-8511 (JP)
(72) Inventor: YASUDA, Shunsuke, Kadoma-shi, Osaka 571-0057 (JP); MIZAWA, Atsushi, Kadoma-shi, Osaka 571-0057 (JP); MIZUKOSHI, Fumikazu, Kadoma-shi, Osaka 571-0057 (JP)
(74) Representative: Eisenführ Speiser
(86) International application number: PCT/JP2023/001865
(87) International publication number: WO 2023/145674

(57) **Abstract**

According to the present invention, a negative electrode (12) of a wound electrode body (14) has a non-facing part (60) which is wound 1.25 turns or more without facing a positive electrode (11) from a facing part that faces the inner winding surface of a leading end (11a) of the positive electrode (11) in the winding direction toward the winding start side. The non-facing part (60) has, sequentially from the facing part toward the winding start side, a first negative electrode mixture layer formed part (61) where a negative electrode mixture layer (52) is provided on at least one surface of a negative electrode core body (51), a first negative electrode core body exposed part (62) where the negative electrode core body (51) is exposed, and a second negative electrode mixture layer formed part (63) where the negative electrode mixture layer (52) is provided on at least one surface of the negative electrode core body (51).

## Description

### TECHNICAL FIELD

The present disclosure relates to a cylindrical non-aqueous electrolyte secondary battery.

### BACKGROUND ART

PATENT LITERATURE 1 discloses a conventional cylindrical non-aqueous electrolyte secondary battery. In this non-aqueous electrolyte secondary battery, a negative electrode having negative electrode mixture layers has a non-facing portion that does not face a positive electrode on an inner winding side of an electrode assembly, and the non-facing portion exists greater than or equal to two rounds. The non-aqueous electrolyte secondary battery restrains deformation of the electrode assembly on the inner winding side by providing the aforementioned non-facing portion on the inner winding side.

### CITATION LIST

### PATENT LITERATURE

PATENT LITERATURE 1: Japanese Unexamined Patent Application Publication No. 2013-137946

### SUMMARY

For a cylindrical non-aqueous electrolyte secondary battery, the positive electrode and the negative electrode expand and contract when charge and discharge are repeated, and the electrode assembly occasionally deforms on the inner winding side. When a positive electrode and negative electrode facing portion deforms, a distance between the positive electrode and the negative electrode varies, and there is concern that a variation in self-discharge amount arises. It is therefore an advantage of the present disclosure to provide a cylindrical non-aqueous electrolyte secondary battery capable of restraining deformation of a positive electrode and negative electrode facing portion.

In order to solve the aforementioned problem, there is provided a cylindrical non-aqueous electrolyte secondary battery according to the present disclosure, comprising: a winding-shaped electrode assembly having a positive electrode and a negative electrode wound via a separator; a non-aqueous electrolyte; and an exterior can that houses the electrode assembly and the non-aqueous electrolyte, wherein the negative electrode includes a non-facing portion that is wound greater than or equal to 1.25 rounds from a facing portion to a winding starting side in a state of not facing the positive electrode, the facing portion facing an inner winding side of a starting end of the positive electrode in a winding direction, in an order from the facing portion side toward the winding starting side, the non-facing portion has a first negative electrode mixture layer formation portion having a negative electrode mixture layer provided on at least one surface of a negative electrode core, a first negative electrode core exposed portion that the negative electrode core is exposed from, and a second negative electrode mixture layer formation portion having a negative electrode mixture layer provided on at least one surface of the negative electrode core, and the first negative electrode mixture layer formation portion is wound greater than or equal to one round.

According to the cylindrical non-aqueous electrolyte secondary battery according to the present disclosure, deformation of a positive electrode and negative electrode facing portion may be restrained.

### BRIEF DESCRIPTION OF DRAWINGS

FIG. 1 is an axial sectional view of a cylindrical non-aqueous electrolyte secondary battery according to an embodiment of the present disclosure.
FIG. 2 is a perspective view of an electrode assembly of the non-aqueous electrolyte secondary battery.
FIG. 3 is a plan view showing a winding structure of the electrode assembly on the inner winding side.
FIG. 4 is a schematic plan view showing one side surface of a negative electrode expanded into a long strip shape.
FIG. 5 is a schematic plan view, corresponding to FIG. 4, of a negative electrode of a non-aqueous electrolyte secondary battery of a comparative example.
FIG. 6 is a plan view, corresponding to FIG. 3, of the negative electrode of the non-aqueous electrolyte secondary battery of the comparative example.

### DESCRIPTION OF EMBODIMENTS

Hereafter, embodiments of a cylindrical non-aqueous electrolyte secondary battery according to the present disclosure will be described in detail with reference to the drawings. It is originally supposed to combine properly characteristic portions of the embodiments and the modifications hereafter described to construct a new embodiment. In the embodiments below, the same configurations in the drawings are given the same signs, and their duplicate description is omitted. Moreover, the drawings include some schematic diagrams, and proportions of dimensions such as lengths, widths, and depths of components do not necessarily coincide with one another between different drawings. Moreover, in the present specification, a sealing assembly 17 side of a cylindrical non-aqueous electrolyte secondary battery 10 in the axial direction (height direction) is regarded as being on the "upside", and a bottom 68 side of an exterior can 16 in the axial direction is regarded as being on the "downside". Among the constituent components described below, constituent components that are not disclosed in the independent claim indicating the highest concept are optional constituent components, not the essential constituent components. Moreover, the present disclosure is not limited to the following embodiments and their modifications, and various improvements and alterations may occur without departing from the scope of the matters disclosed in the claims of the present application and their equivalents.

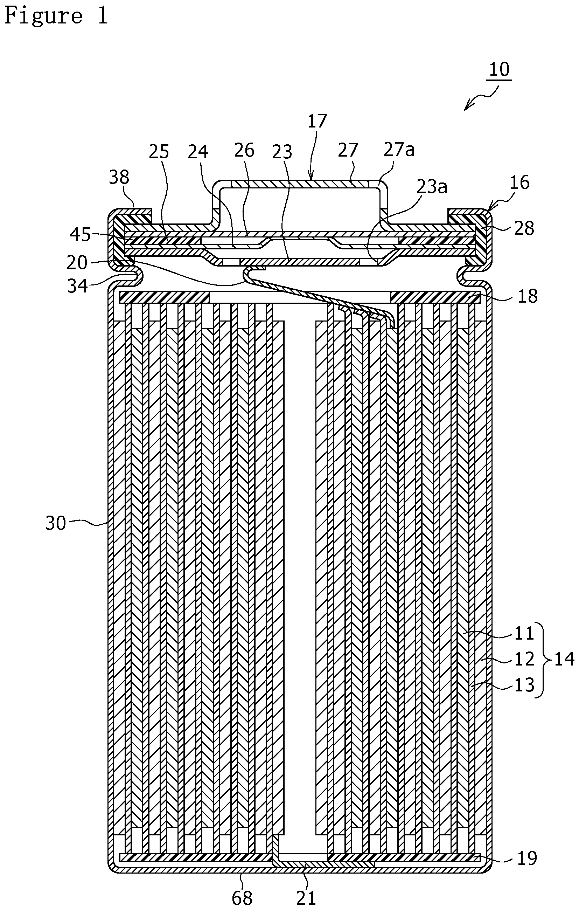

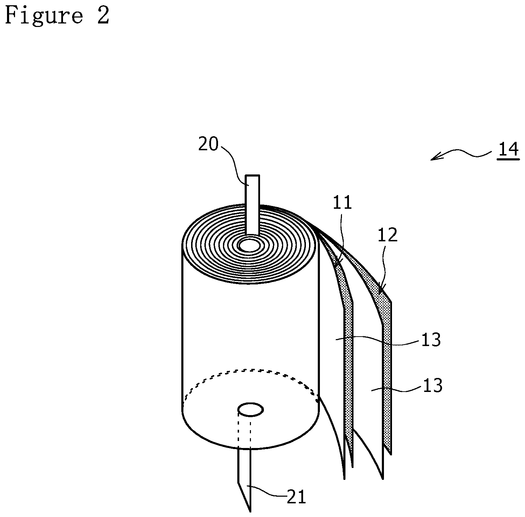

FIG. 1 is an axial sectional view of the cylindrical non-aqueous electrolyte secondary battery 10 according to an embodiment of the present disclosure, and FIG. 2 is a perspective view of an electrode assembly 14 of the non-aqueous electrolyte secondary battery 10. As shown in FIG. 1, the non-aqueous electrolyte secondary battery (hereafter simply referred to as battery) 10 comprises the winding-type electrode assembly 14, a non-aqueous electrolyte (not shown), the bottomed tubular metal-made exterior can 16 housing the electrode assembly 14 and the non-aqueous electrolyte, and the sealing assembly 17 closing an opening of the exterior can 16. As shown in FIG. 2, the electrode assembly 14 has a winding structure having a long strip-shaped positive electrode 11 and a long strip-shaped negative electrode 12 wound via two long strip-shaped separators 13.

In order to prevent precipitation of lithium, the negative electrode 12 is formed to be larger by a certain size than the positive electrode 11. Namely, the negative electrode 12 is formed to be longer than the positive electrode 11 in a longitudinal direction and a width direction (transverse direction). Moreover, the two separators 13 are formed at least to be larger by a certain size than the positive electrode 11 and, for example, are arranged such that the positive electrode 11 is interposed therebetween. The negative electrode 12 may constitute a winding starting end of the electrode assembly 14. Nevertheless, the separators 13 generally extend beyond an end of the negative electrode 12 on the winding starting side, and ends of the separators 13 on the winding starting side constitute the winding starting end of the electrode assembly 14.

The non-aqueous electrolyte includes a non-aqueous solvent and an electrolyte salt dissolved in the non-aqueous solvent. For the non-aqueous solvent, for example, there may be used esters, ethers, nitriles, amides, a mixed solvent of two kinds or more of these, and the like. The non-aqueous solvent may contain a halogen-substituted substance having halogen atom(s) such as fluorine substituted for at least part of hydrogen atoms of these solvents. Notably, the non-aqueous electrolyte is not limited to a liquid electrolyte and may be a solid electrolyte using a gelatinous polymer or the like. For the electrolyte salt, a lithium salt such as LiPF₆ is used.

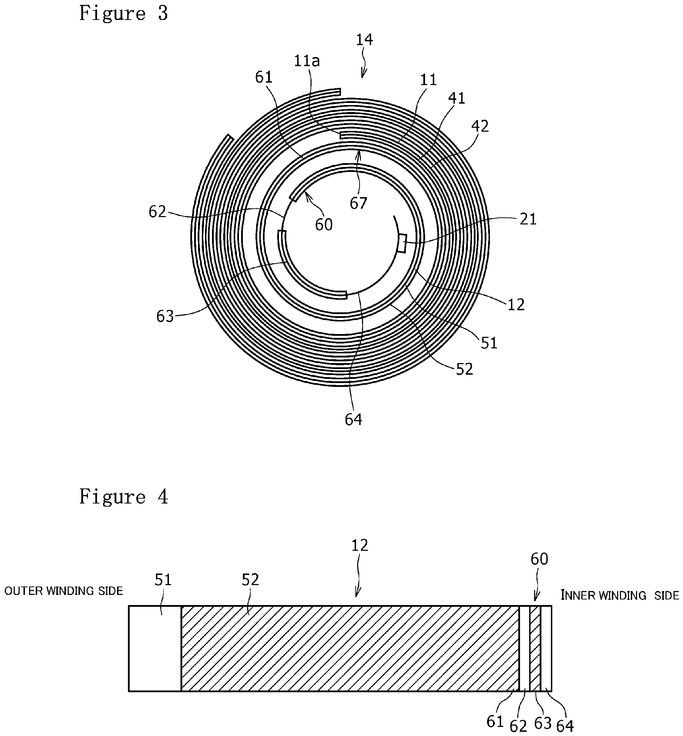

The positive electrode 11 has a positive electrode core 41 (refer to FIG. 3) and positive electrode mixture layers 42 (refer to FIG. 3) formed on both surfaces of the positive electrode core 41. For the positive electrode core 41, there can be used foil of a metal, such as aluminum or aluminum alloy, that is stable in the potential range of the positive electrode 11, a film having the metal disposed in the surface layer, and the like. The positive electrode mixture layers 42 include a positive electrode active material, a conductive agent, and a binder agent. The positive electrode 11 can be produced, for example, by applying positive electrode mixture slurry including the positive electrode active material, the conductive agent, the binder agent, and the like on the positive electrode core 41, drying the coating film and afterward compressing it to form the positive electrode mixture layers 42 on both surfaces of the positive electrode core 41.

The positive electrode active material is composed of a lithium-containing metal composite oxide as a main component. Examples of a metal element contained in the lithium-containing metal composite oxide include Ni, Co, Mn, Al, B, Mg, Ti, V, Cr, Fe, Cu, Zn, Ga, Sr, Zr, Nb, In, Sn, Ta, W, and the like. A preferable example of the lithium-containing metal composite oxide is a composite oxide containing at least one of the group consisting of Ni, Co, Mn, and Al.

Examples of the conductive agent included in the positive electrode mixture layers 42 can include carbon materials such as carbon black, acetylene black, Ketjen black, and graphite. Examples of the binder agent included in the positive electrode mixture layers 42 can include fluorine resins such as polytetrafluoroethylene (PTFE) and polyvinylidene fluoride (PVdF), polyacrylonitrile (PAN), polyimide resins, acrylic resins, polyolefin resins, and the like. There may be used, together with these resins, cellulose derivatives such as carboxymethylcellulose (CMC) or its salt, polyethylene oxide (PEO), and the like.

As shown in FIG. 3 and FIG. 4, the negative electrode 12 has a negative electrode core 51 and negative electrode mixture layers 52 formed on both surfaces of the negative electrode core 51. For the negative electrode core 51, there can be used foil of a metal, such as copper or copper alloy, that is stable in the potential range of the negative electrode 12, a film having the metal disposed in the surface layer, and the like. The negative electrode mixture layers 52 include a negative electrode active material and a binder agent. The negative electrode 12 can be produced, for example, by applying negative electrode mixture slurry including the negative electrode active material, the binder agent, and the like on the negative electrode core 51, drying the coating film and afterward compressing it to form the negative electrode mixture layers 52 on both surfaces of the negative electrode core 51.

For the negative electrode active material, there is generally used a carbon material that reversibly stores and releases lithium ions. Preferable examples of the carbon material include graphite such as natural graphite such as flaky graphite, massive graphite, and earthy graphite, and artificial graphite such as massive artificial graphite and graphitized mesophase carbon microbeads. The negative electrode mixture layers 52 may include, as the negative electrode active material, a Si material containing silicon (Si). Moreover, in this case, the negative electrode mixture layers 52 may include silicon oxide expressed as SiOₓ (0.5≤x≤1.6). Moreover, for the negative electrode active material, there may be used a metal, other than Si, that is alloyed with lithium, an alloy containing the metal, a compound containing the metal, and the like.

While, for the binder agent included in the negative electrode mixture layers 52, fluorine resins, PAN, polyimide resins, acrylic resins, polyolefin resins, and the like may be used as in the case of the positive electrode 11, there is preferably used styrene-butadiene rubber (SBR) or its modified substance. In the negative electrode mixture layers 52, for example, in addition to SBR or the like, there may be included CMC or its salt, polyacrylic acid (PAA) or its salt, polyvinyl alcohol, or the like.

For the separators 13, there are used porous sheets having ion permeability and insulation ability. Specific examples of the porous sheet include a microporous thin film, woven fabric, nonwoven fabric, and the like. For the material of the separators 13, there are preferably employed polyolefin resins such as polyethylene and polypropylene, cellulose, and the like. Each separator 13 may take any of a single layer structure and a stacked structure. A heat resistant layer and/or the like may be formed on a surface of the separator 13.

As shown in FIG. 1, a positive electrode lead 20 is joined to the positive electrode 11, and a negative electrode lead 21 is joined to the winding starting side of the negative electrode 12 in the longitudinal direction. The battery 10 has an insulating plate 18 on the upside of the electrode assembly 14 and an insulating plate 19 on the downside of the electrode assembly 14. The positive electrode lead 20 extends to the sealing assembly 17 side through a through hole of the insulating plate 18, and the negative electrode lead 21 extends to the bottom 68 side of the exterior can 16 through a through hole of the insulating plate 19. The positive electrode lead 20 is connected to a lower surface of a sealing plate 23 of the sealing assembly 17 by welding or the like. A terminal cap 27 constituting a top plate of the sealing assembly 17 is electrically connected to the sealing plate 23, and the terminal cap 27 works as a positive electrode terminal. Moreover, the negative electrode lead 21 is connected to an inner surface of the bottom 68 of the metal-made exterior can 16 by welding or the like, and the exterior can 16 works as a negative electrode terminal.

In the present embodiment, the positive electrode lead 20 is electrically connected to an intermediate portion such as a center portion of the positive electrode core in a winding direction. Moreover, the negative electrode lead 21 is electrically connected to an end of the negative electrode core 51 on the winding starting side in the winding direction, and an end of the negative electrode core 51 on the winding finishing side in the winding direction is brought into contact with an inner surface of the exterior can 16. As above, both the winding starting side and the winding finishing side of the negative electrode 12 are electrically connected to the negative electrode terminal thereby to decrease paths where current flows to reduce an electric resistance. Nevertheless, one negative electrode lead may be electrically connected to the end of the negative electrode core on the winding finishing side in the winding direction without bringing the end of the negative electrode core on the winding finishing side in the winding direction into contact with the inner surface of the exterior can. Otherwise, the electrode assembly may have two negative electrode leads, one of the negative electrode leads may be electrically connected to the end of the negative electrode core on the winding starting side in the winding direction, and the other of the negative electrode leads may be electrically connected to the end of the negative electrode core on the winding finishing side in the winding direction. Otherwise, not using the negative electrode lead, the negative electrode and the exterior can may be electrically connected by bringing the end of the negative electrode core on the winding finishing side in the winding direction into contact with the inner surface of the exterior can.

The battery 10 further comprises a resin-made gasket 28 arranged between the exterior can 16 and the sealing assembly 17. The sealing assembly 17 is crimped and fixed to the opening of the exterior can 16 via the gasket 28. Thereby, the inner space of the battery 10 is hermetically sealed. The gasket 28 is pinched and held by the exterior can 16 and the sealing assembly 17 and insulates the sealing assembly 17 from the exterior can 16. The gasket 28 has a role as a sealing material that keeps gastightness inside the battery and a role as an insulating material that insulates the exterior can 16 and the sealing assembly 17 from each other.

The exterior can 16 houses the electrode assembly 14 and the non-aqueous electrolyte, and has a shoulder 38, a grooved portion 34, a tubular portion 30, and the bottom 68. The grooved portion 34 can be formed, for example, by performing spinning processing on a part of the side wall of the exterior can 16 inward in a radial direction to recess it into an annular shape inward in the radial direction. The shoulder 38 is formed, when the sealing assembly 17 is crimped and fixed to the exterior can 16, by folding an upper end of the exterior can 16 inward toward a peripheral edge 45 of the sealing assembly 17.

The sealing assembly 17 has a structure in which the sealing plate 23, a lower vent member 24, an insulating member 25, an upper vent member 26, and the terminal cap 27 are stacked in the order from the electrode assembly 14 side. Each of the members constituting the sealing assembly 17 has a disc shape or a ring shape, for example, and the members except the insulating member 25 are electrically connected to one another. The sealing plate 23 has at least one through hole 23a. Moreover, the lower vent member 24 and the upper vent member 26 are connected at their center portions, and between their peripheral edges, the insulating member 25 is interposed.

When abnormal heat generation of the battery 10 occurs and an internal pressure of the battery 10 rises, the lower vent member 24 deforms so as to push the upper vent member 26 upward to the terminal cap 27 side and ruptures, and a current path between the lower vent member 24 and the upper vent member 26 is disconnected. When the internal pressure further rises, the upper vent member 26 ruptures and gas is discharged from a through hole 27a of the terminal cap 27. This discharge of the gas can prevent the internal pressure of the battery 10 from excessively rising and the battery 10 from blowing up, and safety of the battery 10 can be enhanced.

FIG. 3 is a plan view showing a winding structure of the electrode assembly 14 on the inner winding side. Notably, in FIG. 3, illustration of the separators is omitted. As shown in FIG. 3, the negative electrode 12 includes a non-facing portion 60 that is wound greater than or equal to 1.25 rounds from a facing portion to the winding starting side in the state of not facing the positive electrode 11, the facing portion facing the inner winding side of a starting end 1 1a of the positive electrode 11 in the winding direction. Moreover, the non-facing portion 60 has a first negative electrode mixture layer formation portion 61 that is wound greater than or equal to one round from the facing portion toward the winding starting side, the facing portion facing the inner winding side of the starting end 11a, and has negative electrode mixture layers 52 continuously provided along the winding direction on both surfaces of the negative electrode core 51.

The non-facing portion 60 further has a first negative electrode core exposed portion 62 that is wound from the first negative electrode mixture layer formation portion 61 to the winding starting side and the negative electrode core 51 is exposed from, and a second negative electrode mixture layer formation portion 63 that is wound from the first negative electrode core exposed portion 62 to the winding starting side and has the negative electrode mixture layers 52 continuously provided on both surfaces of the negative electrode core 51. Namely, in the order from the facing portion facing the inner winding side of the starting end 11a of the positive electrode 11 toward the winding starting side, the non-facing portion 60 has the first negative electrode mixture layer formation portion 61, the first negative electrode core exposed portion 62, and the second negative electrode mixture layer formation portion 63. A length of the first negative electrode core exposed portion 62 is not specially limited, and in the present embodiment, the first negative electrode core exposed portion 62 is wound to have a length of 0.2 rounds. The first negative electrode core exposed portion 62 is preferably wound in the winding direction to have a length of greater than or equal to 0.1 rounds and less than or equal to 0.3 rounds.

The non-facing portion 60 further has a second negative electrode core exposed portion 64 that is wound from the second negative electrode mixture layer formation portion 63 to the winding starting side and the negative electrode core 51 is exposed from. The negative electrode lead 21 is joined to an outer circumferential side of the second negative electrode core exposed portion 64. FIG. 4 is a schematic plan view showing one side surface of the negative electrode 12 expanded into a long strip shape. As shown in FIG. 4, the non-facing portion 60 has the first negative electrode mixture layer formation portion 61, the first negative electrode core exposed portion 62, the second negative electrode mixture layer formation portion 63, and the second negative electrode core exposed portion 64. Notably, while there is described the case where the first and second negative electrode mixture layer formation portions 61 and 63 have the negative electrode mixture layers 52 on both surfaces of the negative electrode core 51, there may be employed a configuration in which the first and second negative electrode mixture layer formation portions have the negative electrode mixture layer provided only on one side surface of the negative electrode core 51.

According to the present embodiment, in the battery 10, the non-facing portion 60 not facing the positive electrode 11 on the inner winding side of the negative electrode 12 has the negative electrode mixture layer formation portions 61 and 63 having the negative electrode mixture layer 52 formed on at least one surface of the negative electrode core 51. Accordingly, since there can be enhanced rigidity of the inner winding side, of the electrode assembly 14, that tends to deform when the electrode assembly 14 repeats charge and discharge, there can be restrained deformation of the positive electrode and negative electrode facing portion 67 on the inner winding side of the electrode assembly 14.

Furthermore, the non-facing portion 60 has the first negative electrode core exposed portion 62 that is positioned so as to be interposed between the first and second negative electrode mixture layer formation portions 61 and 63. Since the first negative electrode core exposed portion 62 has lower rigidity than the first and second negative electrode mixture layer formation portions 61 and 63, when stress is exerted on the inner winding side of the electrode assembly 14, there occurs an action of relaxing the stress on the first negative electrode core exposed portion 62. Since the first negative electrode core exposed portion 62 is arranged so as to be separate by greater than or equal to one round from the positive electrode and negative electrode facing portion 67 to the winding starting side, there is restrained deformation of the positive electrode facing portion 67 even when the first negative electrode core exposed portion 62 deforms.

The first negative electrode core exposed portion 62 is preferably wound greater than or equal to 0.1 rounds and less than or equal to 0.3 rounds. According to this configuration, there is effectively restrained deformation of the positive electrode and negative electrode facing portion 67 on the inner winding side of the electrode assembly 14 by relaxing stress on the inner winding side of the electrode assembly 14, while securing rigidity of the non-facing portion 60. Moreover, when the negative electrode mixture layers 52 include silicon oxide expressed as SiOₓ (0.5≤x≤1.6) and the negative electrode 12 suffers from large expansion and contraction during charge and discharge, the operation of the technology of the present disclosure can be made significant.

### <Example>

### [Production of Positive Electrode]

For the positive electrode active material, aluminum-containing lithium nickel cobalt oxide (LiNi_{0.88}Co_{0.09}Al_{0.03}O₂) was used. First, 100 pts. mass of LiNi_{0.88}Co_{0.09}Al_{0.03}O₂ as the positive electrode active material, 1 pt. mass of acetylene black as a conductive auxiliary agent, and 0.9 pts. mass of polyvinylidene fluoride (PVDF) as the binder agent were mixed in a solvent of N-methylpyrrolidone (NMP) to afford the positive electrode slurry. This positive electrode slurry was applied uniformly on both surfaces of aluminum foil with a thickness of 15 µm. In this stage, a core exposed portion for attaching the positive electrode lead 20 was provided. Next, after NMP was removed by performing a thermal treatment in a heated drying machine, rolling with a roll press machine was performed. Furthermore, the positive electrode plate after the rolling processing was brought into contact with heated rolls to perform a thermal treatment, and was cut to have a thickness of 0.179 mm, a width of 62.6 mm, and a length of 703 mm to produce the positive electrode 11. The aluminum-made positive electrode lead 20 with a width of 3.5 mm was attached to the core exposed portion of the positive electrode 11.

### [Production of Negative Electrode]

Mixing was performed such that the negative electrode active material had 95 pts. mass of graphite powder and 5 pts. mass of Si oxide. One hundred pts. mass of the negative electrode active material, 1 pt. mass of CMC as a thickener agent, and 1 pt. mass of styrene-butadiene rubber as the binder agent were mixed in water to afford the negative electrode slurry. This negative electrode slurry was applied on both surfaces of the negative electrode core 51 of copper foil with a thickness of 8 µm to form the negative electrode mixture layers 52 as shown in FIG. 4. In this stage, the non-facing portion 67 was provided across a range of 1.75 rounds from the facing portion facing the inner winding side of the starting end 11a of the positive electrode 11. The first negative electrode mixture layer formation portion 61 and the first negative electrode core exposed portion 62 were provided across ranges of 1.25 rounds and 0.2 rounds, respectively. Next, after the negative electrode mixture layers 52 were dried, they were compressed with compression rollers such that the negative electrode thickness was 0.192 mm, and cutting was performed to give a width of 64 mm and a length of 816 mm to produce the negative electrode 12. The nickel-copper-made negative electrode lead 21 was attached to the second negative electrode core exposed portion 64 of the negative electrode 12.

### [Preparation of Non-Aqueous Electrolyte Solution]

To 100 pts. mass of a mixed solvent composed of ethylene carbonate (EC) and dimethylmethyl carbonate (DMC) (EC:DMC=1:3 in volume ratio), 5 pts. mass of vinylene carbonate (VC) was added, and LiPF₆ was dissolved in 1.5 mol/L to prepare a non-aqueous electrolyte solution.

### [Assembly of Cylindrical Battery]

The positive electrode 11 and the negative electrode 12 were wound via the polyethylene-made separators 13, and a tape with a width of 9 mm and a length of 60.0 mm was pasted on the outermost periphery, of the electrode assembly 14, that included the winding finishing end of the negative electrode 12 to produce the winding-type electrode assembly 14. As shown in FIG. 3, the non-facing portion 60 of the negative electrode 12 had the first negative electrode core exposed portion 62 between the first and second negative electrode mixture layer formation portions 61 and 63. The core exposed portion of the negative electrode 12 was arranged on the outermost peripheral surface of the electrode assembly 14. The insulating plates 18 and 19 were arranged on the upside and the downside of the electrode assembly 14, the negative electrode lead 21 was welded to the exterior can 16, the positive electrode lead 20 was welded to the sealing plate 23 having an internal pressure-operational vent valve, and housing inside the exterior can 16 was performed. After that, the non-aqueous electrolyte solution was injected inside the exterior can 16 in a reduced pressure scheme. In the final stage, the sealing assembly 17 was crimped and fixed to the opening end of the exterior can 16 via the gasket 28 thereby to produce the cylindrical battery (non-aqueous electrolyte secondary battery) 10. The capacity of the battery 10 was 4600 mAh.

### <Comparative Example>

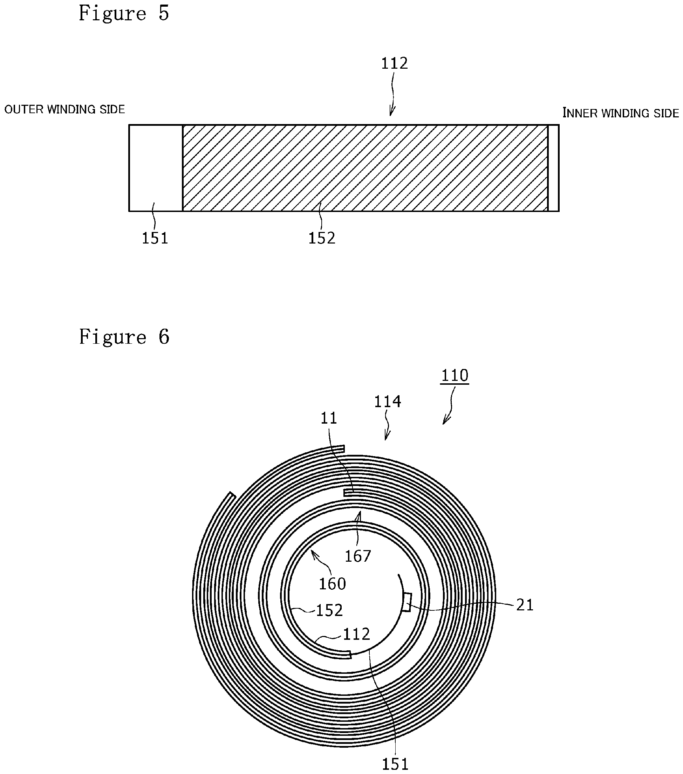

As shown in FIG. 5, a negative electrode 112 was produced that was different from Example only in not providing the negative electrode core exposed portion 62 (refer to FIG. 4) for the purpose of stress relaxation. The negative electrode 112 had a negative electrode core 151 and negative electrode mixture layers 152 provided on both surfaces of the negative electrode core 151 and had negative electrode core exposed portions that the negative electrode core 151 was exposed from at an end of the outer winding side and an end of the inner winding side. As compared with the negative electrode 12 of Example, as to the negative electrode 112 of Comparative Example, its length in the longitudinal direction was shorter by a length of the negative electrode core exposed portion 62 in the longitudinal direction. A mixture layer formation region of the negative electrode 112 of Comparative Example was the same as a mixture layer formation region of the negative electrode 12 of Example. The cylindrical non-aqueous electrolyte secondary battery 110 of Comparative Example was the same as the battery 10 of Example except the configuration of the negative electrode 112. As shown in FIG. 6, the battery 110 of Comparative Example did not have a negative electrode core exposed portion interposed between two negative electrode mixture layer formation portions in a non-facing portion 160 of the negative electrode 112.

### (Cycle Tests)

Charge and discharge cycles were repeated in 500 cycles for each of the battery 10 of Example and the battery 110 of Comparative Example, each cycle including in a 25°C environment, after reaching 4.2 V by constant current charging at 1380 mA (0.3It), performing constant voltage charging at 4.2 V with a termination current of 92 mA (0.02It), after resting for 20 minutes, performing constant current discharging at a discharge current of 4600 mA (1It), and resting for 20 minutes. After that, it was examined whether or not the positive electrode and negative electrode facing portion 67, 167 on the inner winding side of the electrode assembly 14, 114 of the battery 10, 110 deformed.

### (Test Results)

**[Table 1]**

| | Presence or Absence of Deformation |
|---|---|
| Example | No |
| Comparative Example | Yes |

In Comparative Example, the electrode assembly 114 deformed at the positive electrode and negative electrode facing portion 167. As the reason, it is considered that the positive electrode 11 and the negative electrode 112 expanded and contracted during the cycles, and on the inner winding side of the electrode assembly 114, stress was exerted on the positive electrode 11 and the negative electrode 112. On the other hand, in Example, the positive and negative electrode facing portion 67 did not deform although the negative electrode core exposed portion 62 deformed. As the reason, it is considered that concentration of the stress predominantly at the negative electrode core exposed portion 62 provided on the inner winding side relaxed the stress exerted on the positive and negative electrode facing portion 67. It has therefore been confirmed from these tests that according to the battery 10 of the present disclosure, deformation of the positive electrode and negative electrode facing portion 67 on the inner winding side can be restrained.

### REFERENCE SIGNS LIST

10 Battery, 11 Positive electrode, 11a Starting end of the positive electrode, 12 Negative electrode, 13 Separator, 14 Electrode assembly, 16 Exterior can, 17 Sealing assembly, 20 Positive electrode lead, 21 Negative electrode lead, 23 Sealing plate, 27 Terminal cap, 28 Gasket, 51 Negative electrode core, 52 Negative electrode mixture layer, 60 Non-facing portion, 61 First negative electrode mixture layer formation portion, 62 First negative electrode core exposed portion, 63 Second negative electrode mixture layer formation portion, 64 Second negative electrode core exposed portion, 67 Positive electrode and negative electrode facing portion

## Claims

1. A cylindrical non-aqueous electrolyte secondary battery, comprising:
a winding-shaped electrode assembly having a positive electrode and a negative electrode wound via a separator;
a non-aqueous electrolyte; and
an exterior can that houses the electrode assembly and the non-aqueous electrolyte, wherein
the negative electrode includes a non-facing portion that is wound greater than or equal to 1.25 rounds from a facing portion to a winding starting side in a state of not facing the positive electrode, the facing portion facing an inner winding side of a starting end of the positive electrode in a winding direction,
in an order from the facing portion side toward the winding starting side, the non-facing portion has a first negative electrode mixture layer formation portion having a negative electrode mixture layer provided on at least one surface of a negative electrode core, a first negative electrode core exposed portion that the negative electrode core is exposed from, and a second negative electrode mixture layer formation portion having a negative electrode mixture layer provided on at least one surface of the negative electrode core, and
the first negative electrode mixture layer formation portion is wound greater than or equal to one round.

2. The cylindrical non-aqueous electrolyte secondary battery according to claim 1, wherein the first negative electrode core exposed portion is wound greater than or equal to 0.1 rounds and less than or equal to 0.3 rounds.

3. The cylindrical non-aqueous electrolyte secondary battery according to claim 1 or 2, wherein
the non-facing portion has a second negative electrode core exposed portion that the negative electrode core is exposed in the winding starting side than the second negative electrode mixture layer formation portion, and
a negative electrode lead is joined to the second negative electrode core exposed portion.

4. The cylindrical non-aqueous electrolyte secondary battery according to any one of claims 1 to 3, wherein the negative electrode mixture layer includes silicon oxide expressed as SiOₓ (0.5≤x≤1.6).
